# EUROPÄISCHE PATENTSCHRIFT

(11) **EP 2 145 431 B1**
(45) Veröffentlichungstag und Bekanntmachung des Hinweises auf die Patenterteilung: **05.10.2011**
(21) Anmeldenummer: 08733229.2
(22) Anmeldetag: 07.04.2008
(51) Int. Cl.: H04L 12/413, H04L 12/417, H04L 12/40, H04J 3/06, H04L 12/44

(54) **KOMMUNIKATIONSVERFAHREN UND APPARAT ZUR EFFIZIENTEN UND SICHEREN ÜBERTRAGUNG VON TT-ETHERNET NACHRICHTEN**
COMMUNICATION METHOD AND DEVICE FOR EFFICIENT AND SECURE TRANSMISSION OF TT ETHERNET MESSAGES
PROCÉDÉ DE COMMUNICATION ET APPAREIL PERMETTANT UNE TRANSMISSION SÛRE ET EFFICACE DE MESSAGES TT-ETHERNET

(30) Priorität: 11.04.2007 AT 5582007
(43) Veröffentlichungstag der Anmeldung: 20.01.2010
(73) Patentinhaber: FTS Computertechnik GmbH, 2500 Baden-Siegenfeld (AT)
(72) Erfinder: KOPETZ, Hermann, A-2500 Baden (AT); STEINER, Wilfried, A-1090 Wien (AT); BAUER, Günther, A-1020 Wien (AT); WÄCHTER, Matthias, A-1030 Wien (AT); HALL, Brendan, Eden Prairie, MN 55344 (US); PAULITSCH, Michael, Fridley, MN 55421 (US)
(74) Vertreter: Patentanwaltskanzlei Matschnig & Forsthuber OG
(86) Internationale Anmeldenummer: PCT/AT2008/000126
(87) Internationale Veröffentlichungsnummer: WO 2008/124854

(56) Entgegenhaltungen:
- EP-A- 1 512 254
- WO-A-2007/028942
- WO-A-2008/029320
- US-A1- 2003 227 945

## Beschreibung

Die Erfindung betrifft ein Kommunikationsverfahren zur Übertragung von TT-Ethernet Nachrichten in einem verteilten Echtzeitsystem, bestehend aus einer Vielzahl von Knotenrechnern, wobei jeder Knotenrechner über mindestens einen Ethernetkontroller verfügt, welcher Ethernetkontroller über eine Datenleitung mit einem dem Knotenrechner eindeutig zugeordneten Port eines TT-Sternkopplers direkt verbunden ist, und wobei mehrere TT-Sternkoppler über eine oder mehrere Datenleitungen untereinander direkt oder indirekt verbunden sein können, um ein geschlossenes TT-Netzwerk zu bilden.

Weiters betrifft die Erfindung einen TT-Sternkoppler zur Vermittlung von Ethernet Nachrichten in einem oben genannten Kommunikationsverfahren.

In den vergangenen zwanzig Jahren hat sich der IEEE Ethernet Standard 802.3 [5] so weit durchgesetzt, dass aufgrund des vorhandenen Massenmarktes für Ethernet Kontroller im Personal Computer Bereich die Kosten für Ethernet basierte Kommunikationssysteme sehr stark gesunken sind. Aus diesen Kostengründen wird Ethernet auch zunehmend in der Echtzeitdatenverarbeitung eingesetzt. Im Europäischen Patent EP 1 512 254 [4] wird ein Verfahren offen gelegt, das es ermöglicht, zeitgesteuerte Nachrichten mit guten Echtzeiteigenschaft in einem erweiterten Ethernetsystem-im folgenden TT-(*time-triggered*) Ethernet genannt - zu übertragen.

Im TT-Ethernet [4] wird zwischen zwei Nachrichtenkategorien unterschieden, den herkömmlichen Ethernet Nachrichten (im Folgenden ET (*event-triggered*) Nachrichten genannt) und den neuen TT-Nachrichten. Die TT-Nachrichten sind dadurch gekennzeichnet, dass sie im Ethernet Type Field ein spezielles von der Ethernet Standardverwaltung der IEEE autorisiertes Bitmuster (das Bitmuster *88d7*) enthalten [5]. Während die ET Nachrichten (das sind die herkömmlichen Ethernet Nachrichten) aus einer zeitlich unkoordinierten offenen Umgebung kommen und daher im zeitlichen Konflikt zueinander stehen können, wird in TT-Ethemet vorausgesetzt, dass alle TT-Nachrichten entsprechend einem *a priori* festgelegten Zeitplan in einem geschlossenen TT-Netzwerk ohne wechselseitige Behinderung übertragen werden können. Das geschlossene TT-Netzwerk besteht aus einer Anzahl von Knotenrechnern, die über einen oder mehrere TT-Sternkoppler kommunizieren.

Die Nutzdateneffizienz der TT-Nachrichtenübertragung in TT-Ethernet [4] hängt wesentlich von der Präzision II [6] der Uhrensynchronisation der TT-Ethernetkontroller in den Knotenrechnern ab, da der zeitliche Abstand zwischen zwei TT-Nachrichten größer sein muss als die doppelte Präzision II, um jede TT-Nachrichtenkollision ausschließen zu können [2]. Eine sehr präzise Uhrensynchronisation-etwa im Bereich von 1 µsec - setzt eine Hardwareunterstützung [1] voraus, die in handelsüblichen Ethernetkontrollern nicht zu finden ist. Wird die Uhrensynchronisation in Software durchgeführt, so ist es schwierig, eine Präzision von besser als 50 µsec zu realisieren, d.h. zwischen zwei TT-Ethernet Nachrichten muss ein zeitlicher Abstand von mindestens 100 µsec eingeplant werden, um eine Kollision von TT-Nachrichten im TT-Netzwerk auszuschließen. Wenn angenommen wird, dass in einem 100 Mbit/sec Ethernet System die Übertragungszeit vieler TT-Nachrichten wesentlich kürzer ist als 100 µsec, so kann bei Verwendung handelsüblichen Ethernet Kontroller eine Nutzdateneffizienz von wesentlich weniger als 50% auftreten.

Es ist eine Aufgabe der Erfindung, eine Verbesserung der Nutzdatenrate und der Datensicherheit in einem verteilten Echtzeitcomputersystem, in dem die Knotenrechner mittels zeitgesteuerter Ethernet Nachrichten, wie z.B. in EP 1 512 254 offen gelegt, kommunizieren, zu erzielen.

Die vorliegende Erfindung löst diese Aufgabe erfindungsgemäß dadurch, dass jeder TT-Ethernetnachricht durch einen Scheduler *a priori* ein Netzwerksendezeitpunkt, beispielsweise ein periodischer Netzwerksendezeitpunkt zugewiesen wird, wobei der Port des TT-Sternkopplers eine vom Knotenrechner eintreffende TT-Ethernetnachricht so lange verzögert, bis auf seiner Uhr der nächste Netzwerksendezeitpunkt für diesen TT-Ethernetnachrichtentyp erreicht ist, und wobei der Port diese TT-Ethernetnachricht exakt zu diesem Netzwerksendezeitpunkt bzw. in einem exakt nach oben begrenzten Zeitintervall beginnend zu diesem Netzwerksendezeitpunkt in das TT-Netzwerk sendet.

Es wird also zwischen dem Knotenrechnersendezeitpunkt (KNSZPKT) und dem Netzwerksendezeitpunkt (NWSZPKT) einer Nachricht unterschieden. Erfindungsgemäß wird vorgeschlagen, die TT-Sternkoppler so zu modifizieren, dass eine von einem Knotenrechner eintreffende TT-Ethemet Nachricht in einem intelligenten Port des TT-Sternkopplers bis zum NWSZPKT verzögert wird, um sie dann präzise zum NWSZPKT in das TT-Netzwerk senden zu können. Der KNSZPKT, interpretiert von der Uhr des sendenden Knotenrechners, muss so rechtzeitig vor dem NWSZPKT liegen, dass unter allen Umständen (d.h. auch wenn die Uhren von Knotenrechner und TT-Sternkoppler an den Grenzen des Präzisionsintervalls [6] liegen) der Anfang der Nachricht zum NWSZPKT, interpretiert von der Uhr im TT-Sternkoppler, im TT-Sternkoppler eingetroffen ist. Im Intervall zwischen KNSZPKT und NWSZPKT kann vom intelligenten Port des TT-Sternkopplers auch eine zeitliche und semantische Überprüfung der eintreffenden TT-Nachricht vorgenommen werden, um die Fehlererkennung zu verbessern. Da der Knotenrechner und der TT-Sternkoppler zwei getrennte Fault-Containment Regionen bilden [7, 3], lässt sich durch eine Überprüfung der Nachricht im unabhängigen TT-Sternkoppler die Wahrscheinlichkeit für eine Fehlerfortpflanzung durch eine falsche Nachricht reduzieren. Weiters kann der intelligente Port des TT-Sternkopplers die vom Knotenrechner eintreffende Nachricht verschlüsseln, so dass die TT-Nachrichten im Netzwerk verschlüsselt übertragen werden.

Weitere vorteilhafte Ausgestaltungen sind in den Unteransprüchen angegeben.

Durch die vorliegende Erfindung ergeben sich folgende signifikante wirtschaftliche Vorteile:
Die Nutzdateneffizienz der TT-Nachrichtenübertragung kann auch bei Verwendung von handelsüblichen Ethernetkontrollern, welche die Uhrensynchronisation in Software durchführen, auf weit über 90% gesteigert werden.
Die Überprüfung einer TT-Nachricht im intelligenten Port des TT-Sternkopplers reduziert die Wahrscheinlichkeit der Fehlerfortpflanzung und erleichtert die Diagnose.
Die Verschlüsselung der Nachricht im intelligenten Port des TT-Sternkopplers erhöht die Sicherheit eines Echtzeitsystems, ohne die Applikationsrechner zusätzlich zu belasten.

Herkömmliche Ethernet Kontroller können ohne Änderungen in der Hardware zur Übertragung von TT-Nachrichten und ET Nachrichten eingesetzt werden.

Im Folgenden ist die Erfindung an Hand der Zeichnung in einem nicht einschränkenden Beispiel näher erörtert. In dieser zeigt
Fig.1 zeigt den Aufbau eines verteilten Computersystems mit einem TT-Sternkoppler,
Fig. 2. zeigt die Sendezeitpunkte einer Nachricht, und
Fig. 3 zeigt den Aufbau einer TT-Ethernet Nachricht.

Im folgenden Abschnitt wird eine Realisierung des neuen Verfahrens an einem möglichen Beispiel mit drei Knotenrechnern, die über einen TT-Sternkoppler verbunden sind, gezeigt.

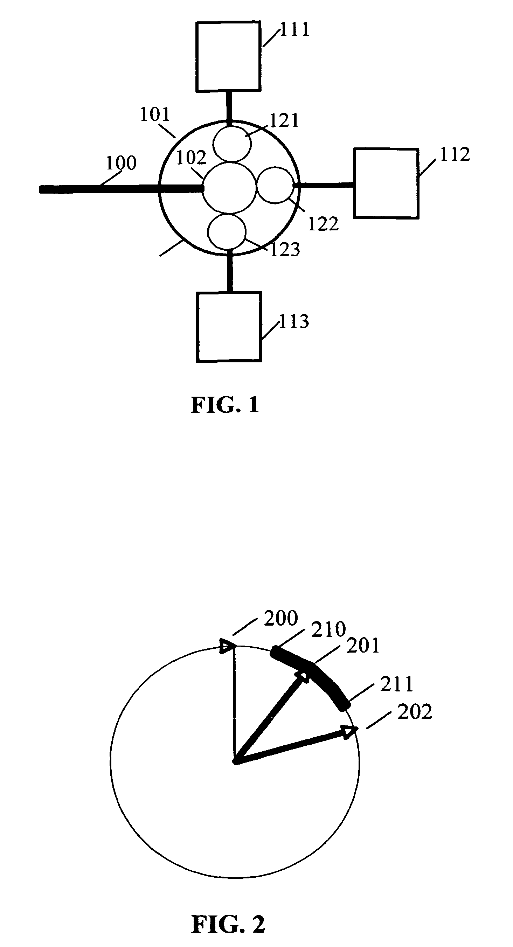

Fig. 1 zeigt ein verteiltes Computersystem mit einem TT-Sternkoppler **101.** Es besteht aus den drei Knotenrechner **111, 112, 113,** die mit dem TT-Sternkoppler **101** über bidirektionale Leitungen verbunden sind. Der TT-Sternkoppler **101** kann über die Leitung **100** mit weiteren TT-Sternkopplern verbunden werden und so Teil eines zeitgesteuerten (TT) Netzwerks, das aus mehreren TT-Sternkopplern besteht, werden. Es wird angenommen, dass die Uhren aller TT-Sternkoppler, die ein TT-Netzwerk bilden, über eine gemeinsame Zeitbasis hoher Präzision [6] (besser als 1 µsec) verfügen. Der TT-Sternkoppler **101** besteht aus den drei intelligenten Ports **121, 122, 123,** die über den eigentlichen Ethernet Switch **102** Nachrichten austauschen können. Jeder der intelligenten Ports **121, 122, 123** verfügt über eine autonome Verarbeitungskapazität, so dass Nachrichten parallel empfangen und in den Ports gleichzeitig bearbeitet werden können. Beispielsweise kann jeder Port über einen eigenen Computer mit lokalem Speicher zur Bearbeitung von Nachrichten verfügen. Eine von einem Knotenrechner, z.B. dem Knotenrechner **111,** am zugeordneten Port **121** eintreffende TT-Ethernetnachricht wird im Port **121** solange verzögert, bis der nächste periodisch wiederkehrende Netzwerksendezeitpunkt (NWSZPKT) für diesen Nachrichtentyp erreicht ist. In TT-Ethemet [4] ist ein Nachrichtentyp eindeutig durch den periodischen Sendezeitpunkt eines Knotenrechners in einem TT-Netzwerk festgelegt. Im Gegensatz dazu wird, entsprechend dieser Erfindung, der TT-Nachrichtentyp durch den periodischen Netzwerksendezeitpunkt (NWSZPKT) einer Nachricht eindeutig bestimmt.

Fig. 2 zeigt den zeitlichen Ablauf des Sendens einer periodischen zeitgesteuerten Nachricht in einer zyklischen Darstellung der Periode am Beispiel des Sendens einer Nachricht durch den Knotenrechner **111** und den Port **121.** Die Zeit schreitet in Fig. 2 im Uhrzeigersinn voran. Da der Netzwerksendepunkt NWSZPKT **202** des intelligenten Ports **121** (und auch die Sendezeitpunkte der anderen Ports **122, 123** und der über die Verbindung **100** angeschlossenen weiteren Ports der anderen TT-Sternkoppler des geschlossenen TT-Netzwerks) auf einer Zeitbasis hoher Präzision [6] basiert (eine Präzision von besser als 1 µsec ist mit entsprechender Hardwareunterstützung leicht erreichbar), kann ein Nachrichten-Scheduler die Einplanung der kollisionsfreien Übertragung der TT-Nachrichten im geschlossenen TT-Netzwerk mit einem durch die Präzision dieser Zeitbasis gegebenen kleinen Abstand zwischen zwei Nachrichten vornehmen und somit eine hohe Nutzdatenrate im TT-Netzwerk realisieren. Nach Festlegung der Netzwerksendepunkte NWSZPKT **202** wird in einer zweiten Phase der Einplanung der Zeitpunkt des Sendens einer TT-Nachricht durch den Knotenrechner, der KNSZPKT 201 festgelegt. Da die Interpretation des KNSZPKT **201** durch die Uhr des Knotenrechners erfolgt, die Interpretation des Netzwerksendezeitpunkt NWSZPKT **202** jedoch durch die Uhr des TT-Sternkopplers erfolgt, muss die gegebene Präzision der Uhrensynchronisation zwischen Knotenrechner und TT-Sternkoppler bei der Planung des Knotenrechnersendezeitpunkts KNSZPKT 201 berücksichtigt werden, so dass selbst im Grenzfall der schlechtesten Synchronisation der Anfang der Nachricht rechtzeitig vor dem Netzwerksendezeitpunkt NWSZPKT 202 im Port des TT-Sternkopplers eingetroffen ist. Der zeitliche Abstand zwischen KNSZPKT und NWSZPKT muss größer sein als die doppelte Präzision dieser Uhrensynchronisation [6] plus der Übertragungsdauer des ersten Bits der Nachricht und der Dauer einer eventuellen Vorverarbeitung der Nachricht im Port des TT-Sternkopplers. Im weiteren muss gewährleistet sein, dass der Rest der Nachricht im Port verfügbar wird bevor dieser Rest der Nachricht gesendet werden muss, damit ein einmal begonnener Sendevorgang nicht unterbrochen werden muss.

Wenn die Uhr des Knotenrechners mit der Uhr des TT-Sternkopplers nicht synchronisiert ist, so ist der KNSZPKT **201** beliebig. In diesem degenerierten Fall wird eine von einem Knotenrechner eintreffende Nachricht im Port des TT-Sternkopplers solange verzögert, bis der nächste periodische NWSZPKT 202 für diesen TT-Nachrichtentyp erreicht wird. Treffen während einer einzigen Nachrichtenperiode mehrere TT-Nachrichteninstanzen des gleichen TT-Nachrichtentyps ein, so wird eine Fehlermeldung an einen Diagnoserechner generiert und keine der TT-Nachrichten weiter gesendet, da offensichtlich ein Fehler aufgetreten ist.

Die erreichbare Präzision der Uhrensynchronisation zwischen den TT-Sternkopplern des TT-Netzwerks und einem Knotenrechner hängt wesentlich von der Art der Uhrensynchronisation im Knotenrechner ab, da angenommen wird, dass alle TT-Sternkoppler über eine entsprechende hardwareunterstützte Uhrensynchronisation von hoher Präzision verfügen. Wenn im Knotenrechner eine Uhrensynchronisation über Software realisiert wird, so kann es schwierig sein, eine Präzision von besser als 50 µsec zu realisieren. Verfügt der Knotenrechner jedoch über spezielle Synchronisationshardware, z.B. einer Uhrensynchronisationshardware entsprechend dem IEEE 1588 Standard [7], so kann eine wesentlich bessere Präzision erzielt werden. Die Erfindung unterstützt somit Endsysteme unterschiedlicher Qualität, die mit unterschiedlichen handelsüblichen Ethernetkontrollern ausgestattet sind, ohne die Nutzdateneffizienz der TT-Ethernetnachrichtenübertragung im TT-Netzwerk herabzusetzen.

Die Attribute einer TT-Nachricht, wie der KNSZPKT **201** und der NWSZPKT **202**, sowie ein eventuell durch den Sternkoppler zu überprüfendes Prädikat einer Nachricht, müssen vor dem Senden der TT-Nachricht bekannt sein. Diese Attribute können entweder statisch von einem *off-line Scheduler* vor der Laufzeit festgelegt werden oder *on-line* von einem TT-Ethernet Service Knoten auf Anforderung eines Knotenrechners unmittelbar vor dem Senden der Nachricht dynamisch ermittelt werden. Ein Knotenrechner kann über Standard ET Ethernet Nachrichten einen TT-Ethernet Serviceknoten auffordern, eine neue TT-Nachricht dynamisch einzuplanen. Ein solcher TT-Ethemet Service Knoten kann, wie jeder andere Ethernet Knotenrechner, an den TT-Sternkoppler **101** angeschlossen werden. Beispielsweise kann in Fig. 1 der Knoten **113** ein solcher TT-Ethemet Serviceknoten sein. In einer anderen Ausprägung derselben Erfindung kann der TT-Ethemet Serviceknoten auch in den TT-Sternkoppler integriert sein. Ein solcher TT-Ethemet Serviceknoten kann auch Zugang zu einer genauen externen Zeitbasis, z.B. über einen GPS Empfänger oder über eine Atomuhr, haben. Diese externe Zeit kann der TT-Ethemet Serviceknoten über Ethernet Nachrichten an alle TT-Sternkoppler und Knotenrechner im gegenständlichen TT-Netzwerk verteilen. Die Verteilung der Zeit kann entsprechend einem bestehenden Standard, z.B. dem IEEE Standard 1588 [5], erfolgen. Dieser Standard wird bereits durch die Hardware einiger Mikrorechner unterstützt. Wenn ein Knotenrechner einen solchen Synchronisationsstandard unterstützt, so kann aufgrund der erreichbaren guten Präzision der Uhr des Knotenrechners der zeitliche Abstand zwischen dem KNSZPKT **201** und dem NWSZPKT 202 klein gehalten werden und so die Latenz bei der Übertragung von Echtzeitinformationen reduziert werden. Wenn eine solche hardwaremäßige Unterstützung der Uhrensynchronisation im Knotenrechner nicht gegeben ist, muss ein längere Übertragungslatenz hingenommen werden.

Wenn der TT-Ethemet Serviceknoten die Netzwerksendezeitpunkte NWSZPKT **202** aller TT-Nachrichten *a priori* an alle vom Nachrichtentransport betroffenen TT-Sternkoppler sendet, so können die TT-Sternkoppler schon rechtzeitig vor dem Eintreffen einer TT-Nachricht die für den Transport der TT-Nachricht zum NWSZPKT benötigten Übertragungskanäle von ET Nachrichten frei halten oder entsprechend [4] frei machen und so den Transport einer TT-Nachricht zum NWSZPKT mit minimaler Latenz auf den reservierten freien Leitungen ermöglichen. Eine solche minimale Nachrichtenlatenz, bei der die Verzögerung in einem Sternkoppler nur wenige Bits beträgt (das sind einem 100Mbit/sec Ethernet System nur kleine Bruchteile einer µsec), ist in Systemen von besonderer Bedeutung, die eine Vielzahl von TT-Sternkopplern beinhalten, beispielsweise wenn eine Bus-Verkabelung durch das Hintereinanderschalten von vielen TT-Sternkopplern unterstützt werden soll und die Gleichzeitigkeit des Eintreffens einer TT Nachricht bei mehreren Knotenrechnern von Bedeutung ist.

Um sicherzustellen, dass nach einem transienten Ausfall des TT-Sternkopplers die globale Zeit, alle NWSZPKTe der TT Nachrichten und alle für die Fehlererkennung benötigten Attribute der an einem Port erwarteten TT-Ethernet Nachrichten innerhalb einer vorab spezifizierten Wiederanlaufzeit in den TT-Sternkopplern und den intelligenten Ports **121, 122,123** der TT-Sternkoppler wieder vorhanden sind, werden die globale Zeit und die TT-Nachrichtenattribute periodisch von einem oder mehreren Serviceknoten an die TT-Sternkoppler gesendet. Der TT-Sternkoppler **101** leitet die globale Zeit an die ihm direkt zugeordneten Knotenrechner **111, 112, 113** periodisch weiter, damit sich die Knotenrechner auf die globale Zeit synchronisieren können.

In einem verteilten Echtzeitsystem bildet jeder Knotenrechner **111, 112** und **113** und der Sternkoppler **101** eine *Fault-Containment Unit (FCU),* d.h., dass die unmittelbaren Folgen eines Fehlers (Software oder Hardware) nur innerhalb der FCU Auswirkungen zeigen. Mittelbar kann eine FCU über fehlerhafte Nachrichten (im Wert- oder Zeitbereich) das Kommunikationssystem und die anderen Knotenrechner negativ beeinflussen. Die fehlerhaften FCUs müssen daher isoliert werden. Wenn nun einer der Knotenrechner **111, 112,113** fehlerhaft ist, so können im allgemeinen Fall keine Annahmen über das Verhalten des fehlerhaften Knotenrechners gemacht werden. Eine Fehlerisolation ist daher nur möglich, wenn zwei unabhängige FCUs vorhanden sind, eine FCU (z.B. der Knotenrechner **111**) zeigt ein fehlerhaftes Verhalten, während eine unabhängige zweite FCU (z.B. der TT Sternkoppler **101**) dieses fehlerhafte Verhalten erkennt und die Fehlerfortpflanzung verhindert. Entsprechend der vorliegenden Erfindung wird zwischen *vertrauenswürdigen* (trusted) und *nicht vertrauenswürdigen* Einheiten unterschieden. Es wird angenommen dass der Sternkoppler **101** und der TT- Ethernetserviceknoten vertrauenswürdig sind und die Knotenrechner **111,112, 113** im Allgemeinen nicht vertrauenswürdig sind. Der vertrauenswürdige Sternkoppler **101** verhindert, dass ein Fehler eines Knotenrechners **111,112,113,** gleichgültig ob in der Hardware oder Software, ob *accidental* oder *intentional* (security Verletzung), Auswirkungen auf das Zeitverhalten der Übertragung von TT-Nachrichten der fehlerfreien Knotenrechner haben kann. Um zu verhindern, dass ein bösartiger (*malicious*) Sender falsche TT-Nachrichtenattribute an den TT Sternkoppler senden kann, werden diese TT-Nachrichtenattribute vom TT-Serviceknoten an den TT Sternkoppler kryptographisch verschlüsselt übertragen.

Wenn im intelligenten Port **121** eine weitere Vorverarbeitung der Nachricht vorgenommen wird, so ist die WCET (Worst-Case-Execution-Time) dieser Vorverarbeitung in der Planung des zeitlichen Abstands zwischen dem KNSZPKT **201** und dem NWSZPKT **202** einzuplanen. Eine solche Vorverarbeitung kann darin bestehen, dass der Inhalt der Nachricht im intelligenten Port **121** verschlüsselt wird oder dass ein Prädikat über den Inhalt der Nachricht überprüft wird, um die Wahrscheinlichkeit der Fehlerfortpflanzung durch einen Fehler im Wertebereich, verursacht durch den Knotenrechner **111,** herabzusetzen. Weiters kann in der Planung der Nachricht ein erwartetes Empfangsfenster mit dem Anfangszeitpunkt **210** und dem Endzeitpunkt **211** vorgegeben werden, so dass ein Fehler im Zeitbereich des Knotenrechners **111** vom Port **121** des unabhängigen TT-Sternkopplers **101** erkannt werden kann. Wenn ein Fehler vom Port **121** erkannt wird, so wird der Port **121** eine ET-Diagnosenachricht an einen Diagnoserechner senden. Da der Knotenrechner **111** und der zugeordnete Port **121** in zwei unabhängigen *Fault-Containment Regionen* angeordnet sind, wird ausgeschlossen, dass eine einzige Fehlerursache einen Fehler verursacht und gleichzeitig die Fehlerkennung ausschaltet. Aus diesem Grund ist die Beobachtung des Verhaltens vom Knotenrechner **111** im zugeordneten intelligenten Port **121** eine besonders wirkungsvolle Art der Fehlererkennung [3].

Der dem Knotenrechner zugeordnete intelligente Port, z.B. der Port **121** bezogen auf den Knotenrechner **111,** kann eine eintreffende TT-Nachricht kryptographisch verschlüsseln, bevor sie in das Netzwerk gesandt wird. Entsprechend muss der Port **121** alle vom Netzwerk verschlüsselt eintreffenden Nachrichten entschlüsseln, ehe eine Nachricht an den Knotenrechner **111** übermittelt wird. Die Schlüsselverwaltung zur Verschlüsselung und Entschlüsselung der TT-Nachrichten erfolgt mit verschlüsselten ET Nachrichten, wobei vorzugsweise der unabhängige TT-Ethernetserviceknoten die TT-Nachrichtenattribute krytographisch verschlüsselt an die Ports der TT-Sternkoppler überträgt.

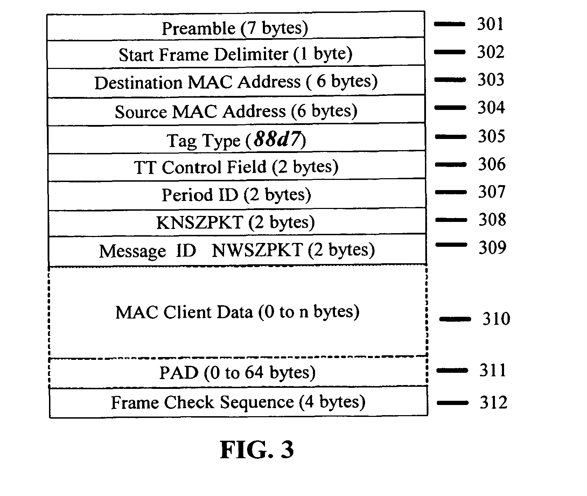

Fig. 3 zeigt eine mögliche Struktur einer zeitgesteuerten (TT) Ethernet Nachricht. Im Ethernet Standard [5] sind die Felder **301** bis **305** und die Felder 310 bis **312** vorgegeben. In Übereinstimmung mit der IEEE Ethernet Standardverwaltung wurde festgelegt, dass alle protokoll-spezifischen TT-Ethernet Nachrichten im Tag Type Feld **305** das Bitmuster *88d7* enthalten, um so jede TT-Ethernet Nachricht weltweit eindeutig identifizieren zu können. Applikationsnachrichten können optional in zeitlicher Hinsicht auf TT-Nachrichten abgebildet und somit mit exakt bestimmten Zeitverhalten versehen werden. Derartige Nachrichten behalten das schon zuvor definierte Tag Type Feld bei. In Fig. 3 ist beispielhaft ein zwei-Byte TT-Kontrollfeld **306** in einer möglichen, aber nicht der einzig möglichen Realisierung der Erfindung vorgesehen. Das erste Byte des Feldes **306** enthält Kontrollinformationen über die TT-Nachricht, z.B. ob die TT-Nachricht eine Synchronisationsnachricht ist. Durch ein weiteres Bit im TT-Kontrollfeld **306** wird unterschieden, ob die Nachricht eine *periodische TT-Nachricht* oder eine *sporadische TT-Nachricht* ist. Eine periodische TT-Nachricht wird in jeder diesem TT-Nachrichtentyp zugeordneten Periode gesendet. Eine sporadische TT-Nachricht wird nicht in jeder diesem Nachrichtentyp zugeordneten Periode gesendet. Während eine periodische TT-Nachricht vom Empfängerknoten als Lebenszeichen des Senderknotens interpretierte werden kann dessen Ausbleiben einen transienten oder permanenten Senderausfall meldet, ist dies bei einer sporadischen TT-Nachricht nicht der Fall.

Das zweite Byte des Feldes **306** enthält die Länge der TT-Ethemet Nachricht, gemessen in Einheiten von 8 Bytes. Das Feld **307,** die *Period ID,* legt die Position der aktuellen Periode in der globalen Zeit mit einem Horizont von sechzehn Bit fest. Der KNSZPKT **201,** der durch die Uhr des Knotenrechners interpretiert wird, ist im Feld **308** enthalten. Der Netzwerksendezeitpunkt NWSZPKT **202,** der durch die Uhr des TT-Sternkopplers interpretiert wird, ist im Feld **309** enthalten. Der NWSZPKT definiert auch eindeutig den TT-Ethemetnachrichtentyp, d.i. die Message ID. Wie schon erwähnt, müssen die Netzwerksendezeitpunkte NWSZPKT **202** aller TT-Nachrichten von einem Scheduler so eingeplant werden, dass es zu keiner Kollision von TT-Nachrichten im gegebenen TT-Netzwerk kommen kann. Hingegen ist es erlaubt, dass mehrere Knotenrechner zum gleichen KNSZPKT **201** ihre TT- Nachricht an den ihnen zugeordneten Ports der TT-Sternkopplers senden.

Abschließend noch einmal zusammen gefasst hat die vorliegende Erfindung zum Ziel, in einem verteilten Echtzeitcomputersystem, indem eine Anzahl von Knotenrechnern über einen oder mehreren Kommunikationskanäle mittels TT-ETHERNET Nachrichten kommunizieren, eine Verbesserung der Nutzdateneffizienz und der Sicherheit bei Verwendung von handelsüblichen ETHERNET Kontrollern zu realisieren. Um dieses Ziel zu erreichen wird zwischen dem Knotenrechnersendezeitpunkt (KNSZPKT) und dem Netzwerksendezeitpunkt (NWSZPKT) einer Nachricht unterschieden. Der KNSZPKT, interpretiert von der Uhr des sendenden Knotenrechners, muss so rechtzeitig vor dem NWSZPKT liegen, dass unter allen Umständen (d.h. auch wenn die Uhren von Knotenrechner und TT-Sternkoppler an den Grenzen des Präzisionsintervalls liegen) der Anfang der Nachricht zum NWSZPKT, interpretiert von der Uhr im TT-Sternkoppler, im TT-Sternkoppler eingetroffen ist. Es wird vorgeschlagen, die TT-Sternkoppler so zu modifizieren, dass eine von einem Knotenrechner eintreffende Nachricht in einem intelligenten Port des TT-Sternkopplers bis zum NWSZPKT verzögert wird, um sie dann präzise zum NWSZPKT in das TT-Netzwerk senden zu können.

Die oben beschriebene konkrete Realisierung der Erfindung stellt nur eine von vielen Realisierungsmöglichkeiten dieser Erfindung dar.

### Zitierte Patente:

[1] US 4866606 issued on Dec. 12, 1989: A loosely coupled distributed computer system with node synchronization for precision in real time.

[2] EP 0 658 257 vom 18.12.1996: Kommunikationskontrolleinheit und Verfahren zur Übermittlung von Nachrichten.

[3] EP 1 222 542 vom 16.4.2003: Nachrichtenverteilereinheit mit integriertem Guardian.

[4] EP 1512 254 vom 10.5.2005: Zeitgesteuertes (Time-Triggered (TT)) Ethernet.

### Sonstige Literatur:

[5] IEEE Ethernet Standard 802.3, URL: http://standards.ieee.org

[6] Kopetz, H. (1997). Real-Time Systems, Design Principles for Distributed Embedded Applications; ISBN: 0-7923-9894-7. Boston. Kluwer Academic Publishers.

[7] IEEE Standard 1588 zur Uhrensynchronisation, URL: http://standards.ieee.org

## Patentansprüche

1. Kommunikationsverfahren zur Übertragung von TT-Ethemet Nachrichten in einem verteilten Echtzeitsystem, bestehend aus einer Vielzahl von Knotenrechnern (**111, 112, 113**), wobei jeder Knotenrechner über mindestens einen Ethernetkontroller verfügt, welcher Ethernetkontroller über eine Datenleitung mit einem dem Knotenrechner eindeutig zugeordneten Port (**121, 122, 123**) eines TT-Sternkopplers (**101**) direkt verbunden ist, und wobei mehrere TT-Sternkoppler über eine oder mehrere Datenleitungen (**100**) untereinander direkt oder indirekt verbunden sind, um ein geschlossenes TT-Netzwerk zu bilden,
**dadurch gekennzeichnet, dass** jeder TT-Ethernetnachricht durch einen Scheduler *a priori* ein Netzwerksendezeitpunkt (**309**) zugewiesen wird, und wobei der Port (**121)** des TT-Sternkopplers (101) reine vom Knotenrechner **(111)** eintreffende TT-Ethernetnachricht so lange verzögert, bis auf seiner Uhr der nächste Netzwerksendezeitpunkt für diesen TT-Ethernetnachrichtentyp erreicht ist, und wobei der Port (**121**) diese TT-Ethernetnachricht exakt zu diesem Netzwerksendezeitpunkt bzw. in einem exakt nach oben begrenzten Zeitintervall beginnend zu diesem Netzwerksendezeitpunkt in das TT-Netzwerk sendet.

2. Kommunikationsverfahren nach Anspruch 1, **dadurch gekennzeichnet, dass** einem TT-Ethernetnachrichtentyp durch einen Scheduler *a priori* ein periodischer Knotenrechnersendezeitpunkt (**308**) zugewiesen wird, der von der Uhr des sendenden Knotenrechners interpretiert wird und der den geplanten Sendezeitpunkt der Nachricht vom Knotenrechner zum zugeordneten Port des TT-Sternkopplers (101) einer Nachricht festlegt, und wobei das Intervall zwischen dem Knotenrechnersendezeitpunkt und dem Netzwerksendezeitpunkt länger ist als die doppelte Präzision der Uhrensynchronisation zwischen den Uhren des Knotenrechners und des TT-Sternkopplersr (101) plus der Dauer des Transports des ersten Bits der Nachricht und der Dauer einer eventuellen Vorverarbeitung der TT-Ethernet Nachricht im autonomen TT-Stemkopplerport, so dass der Anfang der Nachricht rechtzeitig vor dem Netzwerksendezeitpunkt für die Übertragung ins TT-Netzwerk bereit ist und in der Folge die gesamte Nachricht für die weitere kontinuierliche Übertragung ins TT-Netzwerk kontinuierlich rechtzeitig bereitgestellt wird.

3. Kommunikationsverfahren nach Anspruch 1, **dadurch gekennzeichnet, dass** der periodische Netzwerksendezeitpunkt (**309**) in der empfangenen TT-Nachricht enthalten ist.

4. Kommunikationsverfahren nach Anspruch 2 oder 3, **dadurch gekennzeichnet, dass** der periodische Knotenrechnersendezeitpunkt (**308**) in der TT-Nachricht enthalten ist.

5. Kommunikationsverfahren nach einem der Ansprüche 1 bis 4, **dadurch gekennzeichnet, dass** der intelligente Port eines TT-Sternkopplers (101) von einem unabhängigen TT-Ethernetserviceknoten die globale Zeit und die im Zeitbereich spezifizierten Attribute der an diesem Port erwarteten TT-Nachrichten erhält und dynamisch überprüft, ob eine eintreffende TT-Nachricht diesen *a priori* spezifizierten Attributen entspricht.

6. Kommunikationsverfahren nach einem der Ansprüche 1 bis 5, **dadurch gekennzeichnet, dass** der intelligente Port eines TT-Sternkopplers (101) die im Wertebereich spezifizierten Attribute der an diesem Port erwarteten TT-Nachrichten dynamisch überprüft, ob eine eintreffende TT-Nachricht diesen *a priori* spezifizierten Attributen entspricht.

7. Kommunikationsverfahren nach Anspruch 5 oder 6, **dadurch gekennzeichnet, dass** der intelligente Port eines TT-Sternkopplers (101) von einem oder mehreren unabhängigen TT-Ethernetserviceknoten die globale Zeit und die spezifizierten Attribute der zu empfangenden TT- Nachrichten periodisch erhält, so dass innerhalb einer Periode nach dem transienten Ausfall des TT-Sternkopplers der TT-Sternkoppler alle für die Erfüllung der Fehlererkennung notwendigen Zustandsinformationen wieder verfügbar hat

8. Kommunikationsverfahren nach einem der Ansprüche 1 bis 7, **dadurch gekennzeichnet, dass** der intelligente Port eines TT-Sternkopplers (101) eine ET-Ethernet Nachricht an einen Diagnoserechner sendet im Falle, dass eine eintreffende TT-Nachricht eines oder mehrere der spezifizierten Attribute im Zeitbereich oder im Wertebereich verletzt.

9. Kommunikationsverfahren nach einem der Ansprüche 1 bis 8, **dadurch gekennzeichnet, dass** der TT-Sternkoppler **(101)** die globale Zeit periodisch an die an den TT-Sternkoppler unmittelbar angeschlossenen Knotenrechner **(121, 122 ,123)** weiterleitet.

10. Kommunikationsverfahren nach einem der Ansprüche 1 bis 9, **dadurch gekennzeichnet, dass** der intelligente Port eines TT-Sternkopplers (101) eine eintreffende TT-Nachricht kryptographisch verschlüsselt.

11. Kommunikationsverfahren nach einem der Ansprüche 1 bis 10, **dadurch gekennzeichnet, dass** der dem Knotenrechner unmittelbar zugeordnete intelligente Port eines TT-Sternkopplers (101) eine vom Netzwerk eintreffende TT-Nachricht kryptographisch entschlüsselt, bevor die Nachricht an den Knotenrechner gesandt wird.

12. Kommunikationsverfahren nach einem der Ansprüche 1 bis 11, **dadurch gekennzeichnet, dass** ein TT-Sternkoppler (101) auf der Basis des a priori Wissens über die zukünftigen Netzwerksendezeitpunkte der TT-Nachrichten die für die Übertragung einer TT-Nachricht benötigten Übertragungskanäle zwischen den TT-Sternkopplern und den Knotenrechnern rechtzeitig für die erwartete TT-Nachricht frei macht.

13. Verfahren zur Berechnung der Sendezeitpunkte der TT-Nachrichten in einem Kommunikationsverfahren nach einem der Ansprüche 1 bis 12, **dadurch gekennzeichnet, dass** in einer ersten Phase ein konfliktfreier Zeitplan für die Netzwerksendezeitpunkte aller TT-Nachrichten unter Berücksichtung der Präzision der TT-Stemkoppleruhren errechnet wird und in einer zweiten Phase auf der Basis dieses Zeitplans die Knotenrechnersendezeitpunkte der von den Knotenrechnern zu sendenden TT-Nachrichten ermittelt werden unter Berücksichtigung der individuellen Präzision jedes einzelnen Knotenrechners und einer eventuellen Vorverarbeitung der Nachricht in dem der Nachricht zugeordneten Port des TT- Sternkopplers (101).

14. TT-Sternkoppler (101) zur Vermittlung von Ethernet Nachrichten in einem Kommunikationsverfahren nach einem der Ansprüche 1 bis 13, **dadurch gekennzeichnet, dass** der TT-Sternkoppler (101) aus einem zentralen Switch **(102)** und einer Anzahl von intelligenten Ports **(121, 122,123)** besteht, wobei jeder der Ports **(121,122,123)** ein autonomes intelligentes Subsystem mit eigener CPU und Speicher enthält, und wobei das Subsystem dazu eingerichtet ist, eintreffende Ethernet-Nachrichten parallel zu bearbeiten, und wobei eine von einem Knotenrechner eintreffende TT-Ethemet Nachricht in einem intelligenten Port des TT-Sternkopplers bis zum Netzwerksendezeitpunkt verzögert wird, um sie dann präzise zum Netzwerksendezeitpunkt in das TT-Netzwerk senden zu können.

15. TT-Sternkoppler (101) zur Vermittlung von TT-Ethemet Nachrichten, **dadurch gekennzeichnet, dass** der TT-Sternkoppler (101) dazu ausgebildet ist, ein Verfahren nach einem der Ansprüche 1 bis 13 auszuführen.

## Claims

1. A communication method for transmitting TT Ethernet messages in a distributed real-time system, consisting of a plurality of node computers (111, 112, 113), with each node computer having at least one Ethernet controller, which Ethernet controller is directly connected via a data line with a port (121, 122, 123) of a TT star coupler (101), which port is allocated uniquely to the node computer, and with several TT star couplers being connected via one or several data lines (100) among each other directly or indirectly in order to form a closed TT network, **characterized in that** each TT Ethernet message is allocated a network transmission time (309) by a scheduler in advance, and with the port (121) of the TT star coupler (101) delaying a TT Ethernet message received from the node computer (111) for such a time until its clock has reached the next network transmission time for this type of TT Ethernet message, and with the port (121) transmitting this TT Ethernet message into the TT network precisely at this network transmission time or in an upwardly precisely limited time interval starting at this network transmission time.

2. A communication method according to claim 1, **characterized in that** a type of TT Ethernet message is allocated in advance by a scheduler a periodic node computer transmission time (308) which is interpreted by the clock of the transmitting node computer and which determines the planned transmission time of the message from the node computer to the associated port of the TT star coupler (101), and with the interval between the node computer transmission time and the network transmission time being longer than twice the precision of the clock synchronization between the clocks of the node computer and the TT star coupler (101) plus the duration of the transport of the first bit of the message and the duration of a potential preliminary processing of the TT Ethernet message in the autonomous TT star coupler port, so that the start of the message is ready in time before the network transmission time for the transmission into the TT network and subsequently the entire message is provided continuously in time for the further continuous transmission into the TT network.

3. A communication method according to claim 1, **characterized in that** the periodic network transmission time (309) is contained in the received TT message.

4. A communication method according to claim 2 or 3, **characterized in that** the periodic node computer transmission time (308) is contained in the TT message.

5. A communication method according to one of the claims 1 to 4, **characterized in that** the intelligent port of a TT star coupler (101) obtains from an independent TT Ethernet service node the global time and the attributes specified in the time interval of the TT messages expected in this port and checks dynamically whether an incoming TT message corresponds to these attributes specified in advance.

6. A communication method according to one of the claims 1 to 5, **characterized in that** the intelligent port of a TT star coupler (101) dynamically checks the attributes specified in the value range of the TT messages expected in this port as to whether an incoming TT message corresponds to these attributes specified in advance.

7. A communication method according to claim 5 or 6, **characterized in that** the intelligent port of a TT star coupler (101) periodically receives the global time and the specified attributes of the TT messages to be received from one or several independent TT Ethernet service nodes, so that within one period after the transient failure of the TT star coupler the TT star coupler is provided again with all status information which is required for the fulfillment of error recognition.

8. A communication method according to one of the claims 1 to 7, **characterized in that** the intelligent port of a TT star coupler (101) transmits an ET Ethernet message to a diagnostic computer in the case that an incoming TT message breaches one or several of the specified attributes in the time interval or in the value range.

9. A communication method according to one of the claims 1 to 8, **characterized in that** the TT star coupler (101) forwards the global time periodically to the node computers (121, 122, 123) directly connected to the TT star coupler.

10. A communication method according to one of the claims 1 to 9, **characterized in that** the intelligent port of a TT star coupler (101) cryptographically encrypts an incoming TT message.

11. A communication method according to one of the claims 1 to 10, **characterized in that** the intelligent port of a TT star coupler (101) which is directly associated with the node computer cryptographically decrypts a TT message received from the network before the message is sent to the node computer.

12. A communication method according to one of the claims 1 to 11, **characterized in that** on the basis of the advance knowledge on the future network transmission times of the TT messages a TT star coupler (101) opens the transmission channels required for the transmission of a TT message between the TT star couplers and the node computers in time for the expected TT message.

13. A method for calculating the transmission times of the TT messages in a communication method according to one of the claims 1 to 12, **characterized in that** in a first phase a nonconflicting schedule is calculated for the network transmission times of all TT messages by taking into account the precision of the TT star coupler clocks and in a second phase the node computer transmission times of the TT messages to be transmitted by the node computers are determined on the basis of this schedule by taking into account the individual precision of each individual node computer and an optional preliminary processing of the message in the port of the TT star coupler (101) associated with the message.

14. A TT star coupler (101) for relaying Ethernet messages in a communication method according to one of the claims 1 to 13, **characterized in that** the TT star coupler (101) consists of a central switch (12) and a number of intelligent ports (121, 122, 123), with each of these ports (121, 122, 123) containing an autonomous intelligent subsystem with separate CPU and memory, and with the subsystem being set up to process incoming Ethernet messages in parallel, and with a TT Ethernet message received from a node computer being delayed in an intelligent port of the TT star coupler until the network transmission time in order to enable transmitting it precisely at the network transmission time into the TT network.

15. A TT star coupler (101) for relaying TT Ethernet messages, **characterized in that** the TT star coupler (101) is arranged to perform a method according to one of the claims 1 to 13.

## Revendications

1. Procédé de communication pour la transmission de messages TT-Ethernet dans un système en temps réel partagé, constitué d'une pluralité d'ordinateurs nodaux (111, 112, 113), chaque ordinateur nodal disposant d'au moins un contrôleur Ethernet, ledit contrôleur Ethernet étant directement relié par une ligne de données à un port (121, 122, 123) d'un coupleur en étoile TT (101) univoquement affecté à l'ordinateur nodal, et plusieurs coupleurs en étoile TT pouvant être reliés directement ou indirectement entre eux par une ou plusieurs lignes de données (100), pour former un réseau TT fermé,
**caractérisé en ce que** chaque message TT-Ethernet est attribué par un programmateur a priori à un moment d'émission réseau (309), **en ce que** le port (121) du coupleur en étoile TT (101) temporise un message TT-Ethernet arrivant de l'ordinateur nodal (111) jusqu'à ce que le moment d'émission réseau suivant pour ce type de message TT-Ethernet soit atteint sur son horloge, et **en ce que** le port (121) adresse ce message TT-Ethernet vers le réseau TT à ce moment d'émission réseau précis ou dans un intervalle temporel limité vers le haut commençant à ce moment d'émission réseau précis.

2. Procédé de communication selon la revendication 1, **caractérisé en ce qu'**un moment périodique d'émission d'ordinateur nodal (308) est attribué par un programmateur a priori à un type de message TT-Ethernet, ledit moment périodique d'émission d'ordinateur nodal étant interprété par l'horloge de l'ordinateur nodal émetteur, ledit moment périodique d'émission d'ordinateur nodal fixant le moment d'émission prévu pour le message de l'ordinateur nodal vers le port correspondant du coupleur en étoile TT (101) d'un message, et l'intervalle entre le moment d'émission d'ordinateur nodal et le moment d'émission réseau étant supérieur au double de la précision de la synchronisation d'horloges entre les horloges de l'ordinateur nodal et du coupleur en étoile TT (101) plus la durée du transport du premier bit du message et la durée d'un éventuel traitement préalable du message TT-Ethernet dans le port autonome de coupleur en étoile TT, si bien que le début du message est prêt à temps avant le moment d'émission réseau pour la transmission vers le réseau TT et que l'ensemble du message est consécutivement préparé à temps de manière continue pour la suite de la transmission continue vers le réseau TT.

3. Procédé de communication selon la revendication 1, **caractérisé en ce que** le moment périodique d'émission réseau (309) est compris dans le message TT reçu.

4. Procédé de communication selon l'une des revendication 1, 2 ou 3, **caractérisé en ce que** le moment périodique d'émission d'ordinateur nodal (308) est compris dans le message TT.

5. Procédé de communication selon l'une des revendications 1 à 4, **caractérisé en ce que** le port intelligent d'un coupleur en étoile TT (101) reçoit d'un noeud de service TT-Ethernet indépendant le temps global et les attributs spécifiés dans la plage temporelle des messages TT attendus sur ce port, et **en ce qu'**il contrôle dynamiquement si un message TT entrant correspond à ces attributs spécifiés a priori.

6. Procédé de communication selon l'une des revendications 1 à 5, **caractérisé en ce que** le port intelligent d'un coupleur en étoile TT (101) contrôle dynamiquement les attributs spécifiés dans la plage de valeur des messages TT attendus sur ce port, pour détecter si un message TT entrant correspond à ces attributs spécifiés a priori.

7. Procédé de communication selon la revendication 5 ou la revendication 6, **caractérisé en ce que** le port intelligent d'un coupleur en étoile TT (101) reçoit périodiquement d'un ou de plusieurs noeuds de service TT-Ethernet indépendants le temps global et les attributs spécifiés des messages TT à recevoir, si bien que pendant une période suivant la défaillance transitoire du coupleur en étoile TT, le coupleur en étoile TT a de nouveau à disposition toutes les informations d'état nécessitées pour exécuter la détection d'erreur.

8. Procédé de communication selon l'une des revendications 1 à 7, **caractérisé en ce que** le port intelligent d'un coupleur en étoile TT (101) adresse un message ET-Ethernet à un ordinateur de diagnostic au cas où un message TT entrant enfreint un ou plusieurs des attributs spécifiés dans la plage temporelle ou la plage de valeur.

9. Procédé de communication selon l'une des revendications 1 à 8, **caractérisé en ce que** le coupleur en étoile TT (101) transmet périodiquement le temps global aux ordinateurs nodaux (121, 122, 123) directement reliés au coupleur en étoile TT.

10. Procédé de communication selon l'une des revendications 1 à 9, **caractérisé en ce que** le port intelligent d'un coupleur en étoile TT (101) effectue un codage cryptographique d'un message TT entrant.

11. Procédé de communication selon l'une des revendications 1 à 10, **caractérisé en ce que** le port intelligent d'un coupleur en étoile TT (101) directement affecté à l'ordinateur nodal effectue un décodage cryptographique d'un message TT arrivant du réseau, avant que le message soit adressé à l'ordinateur nodal.

12. Procédé de communication selon l'une des revendications 1 à 11, **caractérisé en ce qu'**un coupleur en étoile TT (101) libère à temps les voies de transmission exigées pour la transmission d'un message TT entre les coupleurs en étoile TT et les ordinateurs nodaux pour le message TT attendu, sur la base des connaissances a priori sur les futurs moments d'émission réseau des messages TT.

13. Procédé de calcul des moments d'émission des messages TT suivant un procédé de communication selon l'une des revendications 1 à 12, **caractérisé en ce que**, dans une première phase, un programme temporel exempt de conflits est calculé pour les moments d'émission réseau de tous les messages TT en tenant compte de la précision des horloges de coupleurs en étoile TT, et **en ce que**, dans une deuxième phase, les moments d'émission d'ordinateur nodal des messages TT à adresser par les ordinateurs nodaux sont déterminés sur la base dudit programme temporel en tenant compte de la précision individuelle de chaque ordinateur nodal et d'un traitement préalable éventuel du message dans le port du coupleur en étoile TT (101) affecté au message.

14. Coupleur en étoile TT (101) pour la communication de messages Ethernet suivant un procédé de communication selon l'une des revendications 1 à 13, **caractérisé en ce que** ledit coupleur en étoile TT (101) est constitué d'un commutateur central (102) et d'un certain nombre de ports intelligents (121, 122, 123), chacun desdits ports (121, 122, 123) comprenant un sous-système intelligent autonome à processeur et mémoire propres, et ledit sous-système étant prévu pour traiter en parallèle des messages Ethernet entrants, et un message TT-Ethernet arrivant d'un ordinateur nodal étant temporisé dans un port intelligent du coupleur en étoile TT jusqu'au moment d'émission réseau pour pouvoir ensuite être adressé vers le réseau TT précisément au moment d'émission réseau.

15. Coupleur en étoile TT (101) pour la communication de messages TT-Ethernet, **caractérisé en ce que** ledit coupleur en étoile TT (101) est prévu pour exécuter un procédé selon l'une des revendications 1 à 13.
